## Europäisches Patentamt

(19) **European Patent Office**

**Office européen des brevets**

(11) Numéro de publication: **0 140 441**
**B1**

## (12) FASCICULE DE BREVET EUROPEEN

(45) Date de publication du fascicule du brevet:
**27.01.88**

(21) Numéro de dépôt: **84201497.9**

(22) Date de dépôt: **16.10.84**

(51) Int. Cl.⁴: **C 08 L 27/16,** C 08 K 3/38,
C 08 K 9/08 // G21F1/10

(54) Compositions à base de polymères du fluorure de vinylidène comprenant du carbure de bore.

(30) Priorité: **28.10.83 FR 8317442**

(43) Date de publication de la demande:
**08.05.85 Bulletin 85/19**

(45) Mention de la délivrance du brevet:
**27.01.88 Bulletin 88/4**

(84) Etats contractants désignés:
**AT BE CH DE FR GB IT LI NL SE**

(56) Documents cités:
**EP - A - 0 021 500**
**CH - A - 397 100**
**FR - A - 2 455 067**

(73) Titulaire: **SOLVAY & Cie (Société Anonyme), Rue du Prince Albert, 33, B-1050 Bruxelles (BE)**

(72) Inventeur: **Dumoulin, Joseph, Clos Saint-Roch, 15, B-1970 Wezembeek-Oppem (BE)**
Inventeur: **De Berraly, Jean-Marie, Place Jean Jacobs, 5, B-1410 Waterloo (BE)**

ACTORUM AG

## Description

La présente invention concerne des compositions à base de polymères de fluorure de vinylidène comprenant du carbure de bore.

Le carbure de bore constitue un puissant agent de thermalisation des neutrons. Par ailleurs, les polymères de fluorure de vinylidène présentent un ensemble de propriétés intéressantes et, notamment, une inertie chimique et une stabilité thermique élevées et une bonne résistance aux irradiations ionisantes, ce qui les désigne comme des polymères utilisables pour la fabrication de compositions comprenant du carbure de bore et transformables par voie thermomécanique en objets façonnés destinés à ralentir les neutrons.

Néanmoins, on a constaté maintenant que les compositions à base de polymères du fluorure de vinylidène comprenant du carbure de bore subissent une dégradation thermique non négligeable lorsqu'elles sont mises en œuvre aux températures usuelles de transformation des polymères du fluorure de vinylidène.

La présente invention vise donc à procurer des compositions qui ne présentent pas cet inconvénient.

Selon l'invention, ces compositions comprennent du carbure de bore enrobé d'un polymère acrylique. Par polymère acrylique, on entend désigner les polymères d'acrylates ou de méthacrylates d'alkyles dont les groupements alkyles contiennent de 1 à 6 atomes de carbone. Les polymères acryliques utilisables pour enrober le carbure de bore comprennent donc aussi bien les homopolymères des acrylates et des méthacrylates d'alkyles que les copolymères contenant au moins 50% en poids et, de préférence, au moins 60% en poids d'acrylates ou de méthacrylates d'alkyles. A titre d'exemples de comonomères utilisables, on peut mentionner les acrylates et les méthacrylates d'alkyles dont les groupements alkyles contiennent de 1 à 6 atomes de carbone, l'acrylamide, le méthacrylamide, l'acrylonitrile, le méthacrylonitrile et le styrène. On donne la préférence aux polymères des méthacrylates d'alkyles et plus particulièrement du méthacrylate de méthyle. Les polymères acryliques préférés pour enrober le carbure de bore sont donc choisis parmi le polyméthacrylate de méthyle et les copolymères du méthacrylate de méthyle contenant au moins 60% en poids de méthacrylate de méthyle. Parmi ces derniers, on donne la préférence aux copolymères de méthacrylate de méthyle et d'un comonomère choisi parmi l'acrylate de butyle et le styrène et tout particulièrement aux copolymères de méthacrylate de méthyle et de styrène.

Suivant un mode de réalisation préféré de l'invention, le polymère acrylique enrobant comprend également des unités monomériques dérivées d'un monomère réticulant. A titre d'exemple de pareil comonomère réticulant, on peut citer le diméthacrylate d'éthylèneglycol. La quantité de monomère réticulant présent dans le polymère acrylique s'élève, en général, d'environ 0,1 à 15% en poids et, de préférence, d'environ 1 à 10% en poids.

Des polymères acryliques enrobants auxquels on donne par conséquent tout particulièrement de préférence sont les copolymères de méthacrylate de méthyle, de styrène ou d'acrylate de butyle et de diméthacrylate d'éthylèneglycol.

La technique utilisée pour l'enrobage du carbure de bore n'est pas critique. On peut donc faire appel à des techniques d'enrobage connues de substrats minéraux par des polymères. C'est ainsi qu'on peut effectuer l'enrobage par polymérisation, dans une dispersion aqueuse de carbure de bore en fines particules, des monomères constitutifs du polymère d'enrobage à l'intervention d'un initiateur et, éventuellement, d'un accélérateur de la polymérisation. De préférence, on enrobe les particules de carbure de bore d'un polymère acrylique à l'intervention d'une couche d'ancrage préalablement fixée sur les particules de carbure de bore.

Suivant un mode de réalisation particulièrement préféré de la présente invention, le carbure de bore est enrobé d'un polymère acrylique à l'intervention d'une couche d'ancrage constituée par un complexe d'un polymère polyhydroxylé et d'un cation d'un métal de transition. Pareille technique d'enrobage est décrite dans le brevet EP-A-0021500 (Wyns-Bristol S.A. Peintures et N.V. Trimetal Paint Co.).

La couche d'ancrage est constituée, de préférence, d'un complexe d'alcool polyvinylique et de cuivre à l'état de cation bivalent. Par alcool polyvinylique (PVAL), on entend désigner les polyacétates de vinyle partiellement hydrolysés ayant un taux d'hydrolyse molaire d'environ 72 à 99,5% en poids et un poids moléculaire d'environ 13000 à 132000. Les complexes $PVAL/Cu^{++}$ (rapport pondéral approximatif 10/1), formés in situ ou ex situ à pH au moins égal à 7, sont mis au contact des particules de carbure de bore dispersées dans l'eau. Quoique la granulométrie du carbure de bore ne soit pas particulièrement critique, on préfère le mettre en œuvre sous la forme d'une poudre fine ayant une dimension moyenne des particules inférieure à 50 $\mu$m et, de préférence à 10 $\mu$m. La couche d'ancrage agit comme un catalyseur supporté capable de participer à l'initiation ultérieure de la polymérisation des monomères constitutifs de la couche d'enrobage en polymère acrylique. La polymérisation s'effectue par mise en réaction à température appropriée dans la dispersion aqueuse de particules de carbure de bore pourvues d'une couche d'ancrage des monomères constitutifs de la couche d'enrobage polymérique en présence d'un initiateur radicalaire, qui, avantageusement, peut être un tétrahalogénure de carbone, tel que par exemple le tétrabromure de carbone. Dans certain cas, l'initiateur peut être activé, par exemple par de la triéthanolamine.

La quantité d'agent d'ancrage (complexe) et d'agent enrobant (polymère acrylique) peut varier dans une assez large mesure et dépend, notamment, de la granulométrie et donc de la surface spécifique des particules de carbure de bore. Elle sera avantageusement évaluée par voie expérimentale dans chaque cas particulier. Il est indispensable d'assurer un enrobage polymérique homogène des particules de carbure de bore afin d'empêcher tout contact ultérieur entre le polymère de fluorure de vinylidène et le carbure de bore. En général, le polymère acrylique enrobant est présent à raison d'environ 0,1 à 50 parties et plus particulièrement d'environ 1 à 20 parties en poids pour 100 parties de carbure de bore et à raison d'environ 10 à 150 parties et plus particulièrement d'environ 20 à 100 parties en poids pour 1 partie de la couche d'ancrage (complexe).

La quantité de carbure de bore enrobé de polymère acrylique présente dans les compositions à base de polymères de fluorure de vinylidène selon l'invention peut varier dans une très large mesure, par exemple de 1 à 99% en poids. Habituellement, le carbure de bore enrobé est présent à raison d'environ 5 à 75% en poids de la composition et plus particulièrement encore d'environ 15 à 40% en poids.

Par polymères de fluorure de vinylidène, on entend désigner tous les polymères contenant au moins 85% molaires, et, de préférence, au moins 90% molaires d'unités monomériques dérivées du fluorure de vinylidène. Les polymères de fluorure de vinylidène qui conviennent à la réalisation des compositions selon l'invention comprennent donc aussi bien les homopolymères du fluorure de vinylidène que ses copolymères contenant des unités monomériques dérivées d'un ou de plusieurs comonomères. On donne la préférence aux polymères de fluorure de vinylidène contenant au moins 90% molaires d'unités monomériques dérivées de fluorure de vinylidène, le complément éventuel étant constitué de préférence d'unités monomériques dérivées d'autres oléfines fluorées, tels que le fluorure de vinyle, le trifluoréthylène, le chlorotrifluoréthylène, le tétrafluoréthylène et l'hexafluorpropylène.

La préparation des compositions selon l'invention ne présente pas de problème particulier, toutes les techniques habituelles de préparation de ces compositions pouvant être utilisées. Un mode opératoire particulièrement avantageux consiste à ajouter le carbure de bore enrobé au poymère de fluorure de vinylidène sous la forme d'une poudre lors de la fabrication d'un prémélange, en même temps que les autres additifs entrant dans la composition. On peut aussi introduire le dérivé de carbure de bore directement dans les appareils où le polymère du fluorure de vinylidène est fondu, tels que les extrudeuses à vis.

Les compositions selon l'invention sont aptes à être mises en œuvre par tous les procédés classiques de transformation des matières thermoplastiques. Elles conviennent tout particulièrement pour la fabrication d'objets façonnés tels que plaques, anneaux, etc., destinés à être utilisés dans le domaine nucléaire pour la thermalisation (ralentissement) des neutrons.

Les exemples qui suivent illustrent l'invention sans toutefois la limiter.

Dans les exemples 1 et 2, le polymère est un copolymère du fluorure de vinylidène contenant 10% en poids d'unités monomériques dérivées d'une oléfine fluorée de marque déposée «Solef» et de type 11010 produit et commercialisé par Solvay & Cie.

Dans les exemples 3 et 4, le polymère est un homopolymère du fluorure de vinylidène de marque déposée «Solef» et de type 1010 produit et commercialisé par Solvay & Cie.

Les exemples 1 et 3 illustrent des compositions selon l'invention comprenant du carbure de bore enrobé d'un polymère acrylique. Dans l'exemple 1 le polymère d'enrobage est un copolymère de méthacrylate de méthyle, de styrène et de diméthacrylate d'éthylèneglycol (composition pondérale approximative 71:24:5). Dans l'exemple 3 le polymère d'enrobage est un copolymère de méthacrylate de méthyle, d'acrylate de butyle et de diméthacrylate d'éthylèneglycol (composition pondérale approximative 76:19:5).

Les exemples 2 et 4, de référence, illustrent des compositions comprenant du carbure de bore non enrobé.

Les compositions selon les exemples 1 à 4 contiennent toutes 4 parties en poids de polymère de fluorure de vinylidène pour 1 partie en poids de carbure de bore.

Exemple 1
Enrobage du carbure de bore

Dans un réacteur en verre de 1 l pourvu d'un agitateur hélicoïdal, on introduit sous agitation vigoureuse (145 t/min) et à température ambiante 400 g de carbure de bore en particules ayant un diamètre moyen d'environ 1 μm, 200 ml d'une solution aqueuse d'émulsionnant (sel sodique d'acide gras), 40 ml d'eau déminéralisée, 40 ml d'une solution aqueuse 0,1 N d'hydroxyde de sodium et 10 gouttes d'antimousse. On porte la température de la dispersion aqueuse à 60 °C et on poursuit l'agitation pendant 15 min. On introduit ensuite lentement (en 25 min) 25 ml d'une solution aqueuse à 2% d'alcool polyvinylique et à 0,2% d'ions $Cu^{++}$, préparée préalablement par dissolution d'alcool polyvinylique de marque déposée «Polyviol 04/20» commercialisé par Wacker et de nitrate de cuivre. On maintient l'agitation pendant 30 min. Pendant ce temps, on élimine l'air contenu dans le réacteur par des mises sous vides successives cassées à l'azote. On introduit ensuite, toujours sous agitation et à 60 °C, 10 g de méthacrylate de méthyle, 2 g de diméthacrylate d'éthylèneglycol et 0,05 g de tétrabromure de carbone. Après 15 min, on injecte 20 g de méthacrylate de méthyle, 10 g de styrène et 0,15 g de tétrabromure de carbone. On poursuit la polymérisation pendant 4 h à 60 °C (taux de conversion > 90%) après quoi on isole le carbure de bore enrobé par filtration sous pression, lavage à l'eau, essorage et sèchage en étuve ventilée pendant 15 h à 110 °C. Les agglomérats éventuels sont délités par broyage dans un broyeur à boulets.

Préparation et évaluation de la composition

Sur un mélangeur lent, on mélange 400 g de polymère de fluorure de vinylidène avec 100 g de carbure de bore enrobé, après quoi on extrude des granules dans une extrudeuse à double vis maintenue à 190 °C.

Dans un four en argent maintenu sous balayage d'air, on introduit 1,2 g de granule. A la sortie du four, on absorbe l'air et l'acide fluorhydrique dans une solution aqueuse d'acide citrique monohydraté à 8,02 g/l et de $Na_2HPO_4.2H_2O$ à 22,48 g/l dans de l'eau déminéralisée (pH = 6) et on dose la quantié d'acide fluorhydrique dégagée par chauffage sous air après différents laps de temps.

Dans le tableau I en annexe figurent les résultats de l'évaluation de la cinétique de déshydrofluoration à 220 et à 250 °C.

## Exemple 2

Cet exemple donné à titre de référence concerne une composition identique à celle de l'exemple 1 si ce n'est que le carure de bore n'est pas enrobé.

## Exemple 3

Dans cet exemple, le carbure de bore est enrobé suivant le mode opératoire de l'exemple 1, si ce n'est qu'on introduit en début de polymérisation à 60 °C 8 g de méthacrylate de méthyle, 2 g d'acrylate de butyle, 2 g de diméthacrylate de diéthylèneglycol et 0,05 g de tétrabromure de carbone et 15 min plus tard 24 g de méthacrylate de méthyle, 6 g d'acrylate de butyle et 0,15 g de tétrabromure de carbone.

## Exemple 4

Cet exemple donné à titre de référence concerne une composition identique à celle de l'exemple 3, si ce n'est que le carbure de bore n'est pas enrobé.

La cinétique de déshydrofluoration des compositions selon les exemples 2, 3 et 4 est évaluée dans les conditions décrites à l'exemple 1. Les résultats figurent également au tableau I en annexe.

Tableau I

| N° de l'exemple | Température de l'essai, °C | Durée de l'essai, min | Quantité d'acide fluorhydrique dégagée, mg/kg composition |
|---|---|---|---|
| 1 | 220 | 12 | 32 |
| | 220 | 30 | 92 |
| | 220 | 60 | 145 |
| 1 | 250 | 12 | 36 |
| | 250 | 30 | 130 |
| | 250 | 60 | 240 |
| 2R | 220 | 12 | $5.10^3$ |
| | 220 | 30 | $17.10^3$ |
| | 220 | 60 | $28.10^3$ |
| 2R | 250 | 12 | $16.10^3$ |
| | 250 | 30 | $36.10^3$ |
| | 250 | 60 | $51.10^3$ |

Tableau I (cont.)

| N° de l'exemple | Température de l'essai, °C | Durée de l'essai, min | Quantité d'acide fluorhydrique dégagée, mg/kg composition |
|---|---|---|---|
| 3 | 220 | 30 | 10 |
| | 220 | 60 | 20 |
| | 220 | 120 | 25 |
| 3 | 250 | 30 | 0 |
| | 250 | 60 | 280 |
| | 250 | 120 | 720 |
| 4R | 220 | 30 | $9.10^3$ |
| | 220 | 60 | $26.10^3$ |
| | 220 | 120 | $52.10^3$ |
| 4R | 250 | 30 | $49.10^3$ |
| | 250 | 60 | $69.10^3$ |
| | 250 | 120 | $95.10^3$ |

## Revendications

1. Compositions à base de polymères du fluorure de vinylidène comprenant du carbure de bore, qui est enrobé d'un polymère acrylique.

2. Compositions selon la revendication 1, caractérisées en ce que le polymère acrylique est choisi parmi le polyméthacrylate de méthyle et les copolymères de méthacrylate de méthyle contenant au moins 60% en poids de méthacrylate de méthyle.

3. Compositions selon la revendication 2, caractérisées en ce que le polymère acrylique est un copolymère de méthacrylate de méthyle et d'un comonomère choisi parmi le styrène et l'acrylate de butyle.

4. Compositions selon l'une quelconque des revendications 1 à 3, caractérisées en ce que le polymère acrylique contient de 1 à 10% en poids de cononomère réticulant.

5. Compositions selon l'une quelconque des revendications 1 à 4, caractérisées en ce que le polymère acrylique est choisi parmi es copolymères de méthacrylate de méthyle, de stryrène ou d'acrylate de butyle et de diméthacrylate d'éthylèneglycol.

6. Compositions selon l'une quelconque des revendications 1 à 5, caractérisées en ce que le carbure de bore est enrobé d'un polymère acrylique à l'intervention d'une couche d'ancrage constituée par un complexe d'un polymère polyhydroxylé et d'un cation d'un métal de transition.

7. Compositions selon la revendication 6, caractérisées en ce que la couche d'ancrage est constituée par un complexe d'alcool polyvinylique et de cuivre à l'état de cation bivalent.

8. Compositions selon l'une quelconque des revendications 1 et 6, caractérisées en ce que le polymère acrylique enrobant est présent à raison d'environ 0,1 à 50 parties en poids pour 100 parties de carbure de bore et à raison d'environ 10 à 150 parties en poids pour 1 partie de la couche d'ancrage.

9. Compositions selon l'une quelconque des revendications 1 à 8, caractérisées en ce que le carbure de bore est présent à raison d'environ 5 à 75% en poids de la composition.

10. Compositions selon la revendication 9, caractérisées en ce que le carbure de bore est présent à raison d'environ 15 à 40% en poids de la composition.

### Patentansprüche

1. Zusammensetzungen auf Basis von Polymeren von Vinylidenfluorid enthaltend Borcarbid, welches mit einem Acrylpolymer umhüllt ist.

2. Zusammensetzungen gemäss Anspruch 1, dadurch gekennzeichnet, dass das Acrylpolymer ausgewählt ist unter Methylpolymethacrylat und den Copolymeren von Methylmethacrylat, enthaltend mindestens 60 Gew.-% Methylmethacrylat.

3. Zusammensetzungen gemäss Anspruch 2, dadurch gekennzeichnet, dass das Acrylpolymer ein Copolymer von Methylmethacrylat und einem Comonomer, ausgewählt unter Styrol und Butylacrylat ist.

4. Zusammensetzungen gemäss einem der Ansprüche 1 bis 3, dadurch gekennzeichnet, dass das Acrylpolymer 1 bis 10 Gew.-% des vernetzenden Comonomers enthält.

5. Zusammensetzungen gemäss einem der Ansprüche 1 bis 4, dadurch gekennzeichnet, dass das Acrylpolymer ausgewählt ist unter den Copolymeren von Methylmethacrylat, Styrol oder Butylacrylat und Ethylenglycol-Dimethacrylat.

6. Zusammensetzungen gemäss einem der Ansprüche 1 bis 5, dadurch gekennzeichnet, dass das Borcarbid mit einem Acrylpolymer umhüllt ist unter Zwischenschaltung einer Verankerungsschicht, gebildet aus einem Komplex aus einem polyhydroxylierten Polymer und einem Übergangsmetallkation.

7. Zusammensetzungen gemäss Anspruch 6, dadurch gekennzeichnet, dass die Verankerungsschicht gebildet ist durch einen Komplex aus Polyvinylalkohol und Kupfer im Zustand eines zweiwertigen Kations.

8. Zusammensetzungen gemäss einem der Ansprüche 1 bis 6, dadurch gekennzeichnet, dass das umhüllende Acrylpolymer anwesend ist im Gewichtsverhältnis von ungefähr 0,1 bis 50 Teilen je 100 Teile Borcarbid und im Gewichtsverhältnis von etwa 10 bis 150 Teilen je ein Teil Verankerungsschicht.

9. Zusammensetzungen gemäss einem der Ansprüche 1 bis 8, dadurch gekennzeichnet, dass das Borcarbid anwesend ist in einer Menge von etwa 5 bis 75 Gew.-%, bezogen auf die Zusammensetzung.

10. Zusammensetzungen gemäss Anspruch 9, dadurch gekennzeichnet, dass das Borcarbid anwesend ist in einer Menge von ungefähr 15 bis 40 Gew.-%, bezogen auf die Zusammensetzung.

### Claims

1. Compositions based on vinylidene fluoride polymers incorporating boron carbide with is coated with an acrylic polymer.

2. Compositions according to claim 1, characterized in that the acrylic polymer is chosen from polymethyl methacrylate and copolymers of methyl methacrylate containing at least 60% by weight of methyl methadrylate.

3. Compositions according to claim 2, characterized in that the acrylic polymer is a copolymer of methyl methacrylate and a comonomer chosen from styrene and butyl acrylate.

4. Compositions according to any one of claims 1 to 3, characterized in that the acrylic polymer contains from 1 to 10% by weight of crosslinking comonomer.

5. Compositions according to any one of claims 1 to 4, characterized in that the acrylic polymer is chosen from copolymers of methyl methacrylate, styrene or butyl acrylate and ethylene glycol dimethacrylate.

6. Compositions according to any one of claims 1 to 5, characterized in that the boron carbide is coated with an acrylic polymer with the use of an anchor coating consisting of a complex of a polyhydroxylated polymer and a transition metal cation.

7. Compositions according to claim 6, characterized in that the anchor coating consists of a complex of polyvinyl alcohol and copper in the divalent cation state.

8. Compositions according to any one of claims 1 to 6, characterized in that the coating acrylic polymer is present in a concentration of approximately 0.1 to 50 parts by weight per 100 parts of boron carbide and in a concentration of approximately 10 to 150 parts by weight per 1 part of the anchor coating.

9. Compositions according to any one of claims 1 to 8, characterized in that the boron carbide is present in a concentration of approximately 5 to 75% by weight of the composition.

10. Compositions according to claim 9, characterized in that the boron carbide is present in a concentration of approximately 15 to 40% by weight of the composition.